(19) Europäisches Patentamt
European Patent Office
Office européen des brevets

(11) EP 0 669 686 B1

(12) EUROPÄISCHE PATENTSCHRIFT

(45) Veröffentlichungstag und Bekanntmachung des Hinweises auf die Patenterteilung:
19.11.1997 Patentblatt 1997/47

(51) Int Cl.⁶: H02B 13/00, H02B 1/54

(21) Anmeldenummer: 94102937.3

(22) Anmeldetag: 26.02.1994

(54) **Tragrahmen für ein Gerät**

Suspension assembly for an apparatus

Structure de suspension pour un appareil

(84) Benannte Vertragsstaaten:
CH DE FR LI NL

(43) Veröffentlichungstag der Anmeldung:
30.08.1995 Patentblatt 1995/35

(73) Patentinhaber: ASEA BROWN BOVERI AG
5400 Baden (CH)

(72) Erfinder: Hägeli, Heinz
CH-8116 Würenlos (CH)

(56) Entgegenhaltungen:
DE-A- 1 204 301          DE-A- 2 632 178
FR-A- 2 537 231          GB-A- 265 360
GB-A- 1 120 107          US-A- 3 215 897

## Beschreibung

TECHNISCHES GEBIET

Die Erfindung geht aus von einem Tragrahmen gemäss dem Oberbegriff des Anspruchs 1, wie er in GB-A-1 120 107 beschrieben ist.

Aus der Patentschrift EP 0 129 216 B1 ist weiterhin ein Tragrahmen für eine Baugruppe einer metallgekapselten gasisolierten Schaltanlage bekannt. Dieser Tragrahmen liegt direkt und ohne einen Zwischenraum auf einem Fundament auf und ist starr mit diesem verbunden. Der Tragrahmen nimmt das gesamte Gewicht dieser Baugruppe auf und überträgt es unmittelbar auf das Fundament. Zusätzlich werden beim Schalten auch die Reaktionskräfte, die durch die bewegten Massen der Schaltgerate, insbesondere die der mit senkrechter Längsachse angeordneten Leistungschalter, hervorgerufen werden, ungedämpft auf das Fundament übertragen. Dies hat zur Folge, dass das Fundament vergleichsweise kräftig dimensioniert werden muss, damit es diesen stossartigen Belastungen auf Dauer standhalten kann.

DARSTELLUNG DER ERFINDUNG

Die Erfindung, wie sie in dem unabhängigen Anspruch 1 gekennzeichnet ist, löst die Aufgabe, einen Tragrahmen für ein Gerät zu schaffen, der die Intensität der Reaktionskräfte, die stossartig auf das den Tragrahmen aufnehmende Fundament einwirken, reduziert.

Die durch die Erfindung erreichten Vorteile sind darin zu sehen, dass der Tragrahmen die wesentlichen auf das Fundament einwirkenden stossartigen Belastungen soweit reduziert, dass leichtere und damit kostengünstigere Fundamente für das auf dem Tragrahmen befestigte Gerät eingesetzt werden können.

Der Tragrahmen ist mit mindestens zwei Traversen, mit mindestens einer an jeder der Traversen vorgesehenen Befestigungsstelle für die Aufnahme der zu tragenden Baugruppe und mit mindestens einer an jeder der Traversen vorgesehenen Verbindungsstelle für die Verbindung der Traverse mit dem Fundament versehen. Als besonders vorteilhaft wirkt es sich aus, dass die Traversen federnd ausgebildet sind, dass zwischen der jeweiligen Traverse und dem Fundament ein Zwischenraum vorgesehen ist, und dass der Zwischenraum nur an der mindestens einen Verbindungsstelle überbrückt ist.

Der Tragrahmen lässt sich besonders günstig herstellen, wenn die mindestens zwei Traversen als Metallprofil ausgebildet ist, inbesondere als ein I-Profil oder als ein Rohrprofil mit rechteckigem oder rundem Querschnitt.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

KURZE BESCHREIBUNG DER ZEICHNUNG

Es zeigen:

Fig.1 eine erste Ausführungsform eines erfindungsgemässen Tragrahmens,

Fig.2 eine seitliche Ansicht des Tragrahmens gemäss Fig.1, und

Fig.3 eine seitliche Ansicht einer zweiten Ausfürungsform eines erfindungsgemässen Tragrahmens.

Bei allen Figuren sind gleich wirkende Elemente mit gleichen Bezugszeichen versehen. Alle für das unmittelbare Verstandnis der Erfindung nicht erforderlichen Elemente sind nicht dargestellt.

WEGE ZUR AUSFÜHRUNG DER ERFINDUNG

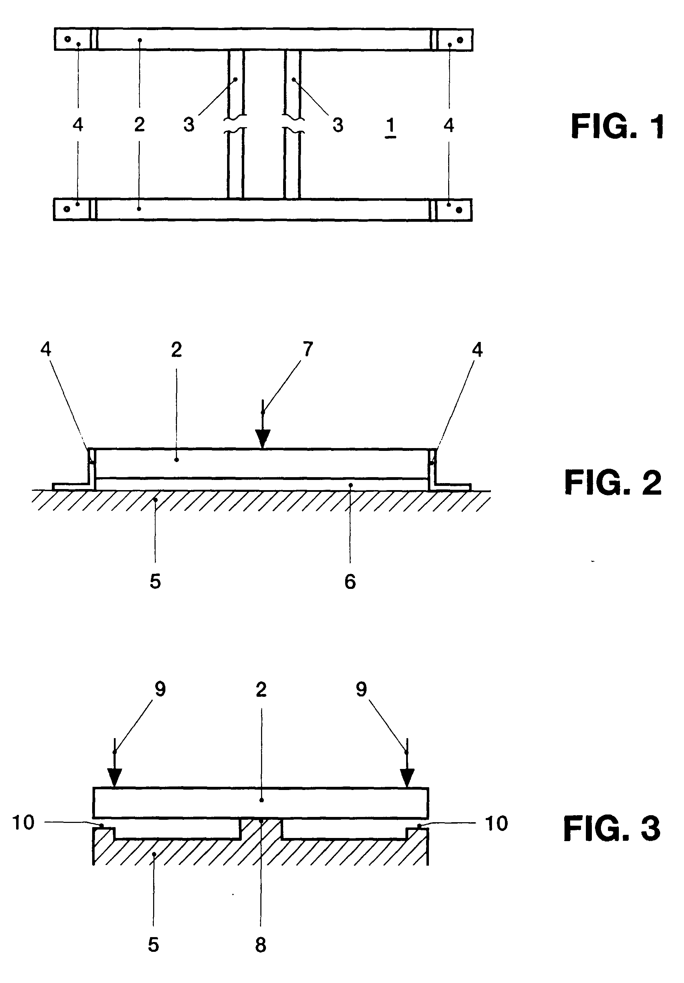

Die Fig.1 und die Fig.2 zeigen einen schematisch dargestellten Tragrahmen 1 für ein Gerät. Dieser Tragrahmen 1 weist zwei Traversen 2 auf, die aus einem Metallprofil gefertigt sind. Als besonders geeignete Metallprofile können beispielsweise I-Profile oder Rohrprofile aus Stahl eingesetzt werden. Die Rohrprofile weisen in der Regel einen runden oder einen rechteckigen Querschnitt auf. Die beiden Traversen 2 sind durch zwei Querträger 3 verbunden. Diese Querträger 3 sind als Befestigungsstelle ausgebildet für die Aufnahme des Gerätes, sie weisen Bohrungen auf, die für die Befestigung des Gerätes verwendet werden. An jedem Ende der Traversen 2 sind Winkelprofile 4 angebracht, welche als Verbindungsstellen dienen für die kraftschlüssige Befestigung des Tragrahmens 1 auf einem Fundament 5. Die Traversen 2 sind federnd ausgebildet. Damit sich diese Federung auswirken kann, bleibt zwischen den Traversen 2 und dem Fundament 5 ein Zwischenraum 6, der einen Federhub erlaubt. Es liegen lediglich die Winkelprofile 4 des Tragrahmens 1 auf dem Fundament 5 auf. Ein Pfeil 7 deutet die Kraftrichtung der auf den Tragrahmen 1 einwirkenden Last und etwaiger überlagerter Reaktionskräfte an. In der Regel wird darauf geachtet, dass die Last im Bereich der Mitte der Traversen 2 aufliegt.

Es ist eine Vielzahl von Ausführungsformen des Tragrahmens 1 vorstellbar. Es ist durchaus möglich auch nur eine einzige, im Bedarfsfall etwas breiter ausgebildete Traverse 2 zu verwenden und die Befestigungsstelle für die Aufnahme des Gerätes direkt auf dieser vorzusehen. Ferner ist es möglich, bei Tragrahmen 1 mit Querträgern 3 auch die Querträger 3 federnd auszubilden, sodass die Traversen 2 gemeinsam mit den Querträgern 3 federn. Es ist zudem möglich, in dem Zwischenraum 6 mit dem Fundament 5 verbundene Anschläge vozusehen, die den Federhub der Traversen 2 begrenzen. Eine derartige Begrenzung kann auch durch die Oberfläche des Fundaments 5 selber erfolgen, wenn die Höhe des Zwischenraums 6 entsprechend genau dimensioniert wird.

Die Fig.3 zeigt eine seitliche Ansicht eines weiteren schematisch dargestellten Tragrahmens 1 für ein Gerät. Dieser Tragrahmen 1 weist pro Traverse 2 nur eine als Verbindungsstelle dienende kraftschlüssige Befestigung 8 des Tragrahmens 1 auf dem Fundament 5 auf. Diese Befestigung 8 ist hier etwa in der Mitte der Traverse 2 vorgesehen. Pfeile 9 im Bereich der Enden der Traverse 2 deuten die Kraftrichtung der auf den Tragrahmen 1 einwirkenden Last und etwaiger überlagerter Reaktionskräfte an. Unter den Enden der Traverse 2 ist jeweils ein Anschlag 10 vorgesehen, welcher mit dem Fundament 5 verbunden ist. Der Anschlag 10 begrenzt einerseits den Federhub der Traverse 2 und andererseits verhindert er ein Kippen des Tragrahmens 1 mit dem darauf befestigten Gerät, wenn ein Erdbeben auftreten sollte. Der Anschlag 10 kann auch aus einem elastischen Material hergestellt sein.

Der Tragrahmen 1 eignet sich besonders für die Befestigung von Baugruppen einer gasisolierten Schaltanlage, die mit Hilfe des Tragrahmens 1 zu Transporteinheiten zusammengestellt werden. Weisen diese Baugruppen Schaltgeräte auf, deren Längsachse senkrecht zum Tragrahmen 1 verläuft und deren bewegte Massen sich im wesentlichen in Richtung dieser Längsachse bewegen, so wirken sich die federnd ausgebildeten Traversen 2 besonders vorteilhaft aus. Die durch das Beschleunigen und das Abbremsen der bewegten Massen bei Schaltvorgängen erzeugten Reaktionskräfte wirken über den Tragrahmen 1 stossartig auf das Fundament 5 ein. Neben der Aufnahme des Gewichts der Baugruppe musste das Fundament 5 bisher auch für die Aufnahme dieser Stösse ausgelegt sein. Durch die federnd ausgebildeten Traversen 2 werden diese Stösse jedoch so gedämpft, dass die durch sie hervorgerufene zusätzliche Belastung des Fundaments 5 vernachlässigbar ist, sodass das Fundament 5 nun für geringere Belastungen ausgelegt und damit preislich günstiger erstellt werden kann. Leistungsschalter weisen in gasisolierten Schaltanlagen in der Regel die grössten und mit der grössten Geschwindigkeit bewegten Massen auf. Der Tragrahmen 1 lässt sich jedoch so auslegen, dass auch die von Leistungsschaltern hervorgerufenen Reaktionskräfte einwandfrei gedämpft werden.

Wird beispielsweise eine mit senkrecht angeordneten Leistungsschaltern bestückte Baugruppe einer gasisolierten Schaltanlage auf einen Tragrahmen 1 montiert, so kann diese Anordnung vereinfacht als ein Einmassenschwinger angesehen werden. Bei diesem Einmassenschwinger stellt der Tragrahmen 1 die Feder dar und die Baugruppe die ruhende, nach Anregung mit der Feder schwingende Masse, die durch durch das bei Schaltvorgängen erzeugte impulsartige Beschleunigen und Abbremsen der bewegten Massen der Leistungsschalter zu Schwingungen angeregt wurde. Die diesen Vorgang beschreibende Differentialgleichung hat die Form:

$$m\ddot{x} + kx = F(t)$$

Die Lösung dieser Differentialgleichung ergibt eine Funktion, die wie folgt dargestellt werden kann:

$$K = K(\beta)$$

Der dimensionslose Parameter K, der als dynamischer Erhöhungsfaktor anzusehen ist, ist wie folgt definiert:

$$K = \frac{\text{Schaltkraft infolge der bewegten Masse}}{\text{Kraft infolge der ruhenden Masse}}$$

Der dimensionslose Parameter $\beta$, der als Frequenzfaktor anzusehen ist, ist wie folgt definiert:

$$\beta = \frac{\text{Impulsdauer der Schaltkraft}}{\text{Eigenfrequenz der ruhenden Masse}}$$

Die Federcharakteristik des Tragrahmens 1 kann, beispielsweise durch eine entsprechende Materialwahl, so optimiert werden, dass die auf das Fundament 5 einwirkenden, von der Schaltkraft infolge der bewegten Massen herrührenden, Reaktionskräfte minimal werden. In diesem Fall genügt es dann, das Fundament 5 lediglich für die anderen durch den Tragrahmen 1 übertragenen Lasten wie Eigengewicht der Baugruppe, Windlast, Erdbebenbelastung usw. auszulegen. Das Fundament 5 kann deshalb wesentlich weniger stark und deshalb auch wirtschaftlich günstiger erstellt werden.

**BEZEICHNUNGSLISTE**

1   Tragrahmen
2   Traverse
3   Querträger
4   Winkelprofile
5   Fundament
6   Zwischenraum
7   Pfeil
8   Befestigung
9   Pfeile
10  Anschlag

**Patentansprüche**

1. Tragrahmen (1) für eine Baugruppe einer gasisolierten Schaltanlage mit mindestens zwei Traversen (2), mit mindestens einer an jeder der Traversen (2) vorgesehenen Befestigungsstelle für die Aufnahme der zu tragenden Baugruppe, mit mindestens einer an jeder der Traversen (2) vorgesehenen Verbindungsstelle für die Verbindung der Traverse (2) mit einem Fundament (5), wobei zwischen der jeweiligen Traverse (2) und dem Fundament (5) ein Zwischenraum (6) vorgesehen ist, welcher nur an der mindestens einen Verbindungsstelle überbrückt ist, wobei die beiden Traversen (2) mit mindestens einem als Befestigungsstelle ausgebildeten Querträger (3) verbunden sind dadurch gekennzeichnet,

- dass die Traversen (2) federnd ausgebildet sind.

2. Tragrahmen nach Anspruch 1, dadurch gekennzeichnet,

- dass die Traversen (2) als Metallprofil ausgebildet sind, insbesondere als ein I-Profil oder als ein Rohrprofil mit rechteckigem oder rundem Querschnitt.

3. Tragrahmen nach Anspruch 1, dadurch gekennzeichnet,

- dass die Baugruppe Schaltgeräte aufweist, deren Längsachse senkrecht zum Tragrahmen (1) angeordnet ist und deren bewegte Massen sich im wesentlichen in Richtung der Längsachse bewegen.

4. Tragrahmen nach Anspruch 3, dadurch gekennzeichnet,

- dass als Schaltgeräte Leistungsschalter vorgesehen sind.

5. Tragrahmen nach Anspruch 1, dadurch gekennzeichnet,

- dass die Befestigungsstelle im Bereich der Mitte und die Verbindungsstelle jeweils am Ende der Traverse (2) vorgesehen ist.

6. Tragrahmen nach Anspruch 1, dadurch gekennzeichnet,

- dass die Befestigungsstelle jeweils an jedem Ende der Traverse (2) vorgesehen ist, und
- dass die Verbindungsstelle im Bereich der Mitte der Traverse (2) vorgesehen ist.

7. Tragrahmen nach Anspruch 6, dadurch gekennzeichnet,

- dass an jedem Ende der Traverse (2) ein mit dem Fundament (5) verbundener Anschlag (10) das Federn der Traverse (2) begrenzt.

8. Tragrahmen nach Anspruch 7, dadurch gekennzeichnet,

- dass der Anschlag (10) aus einem elastischen Material gefertigt ist.

**Claims**

1. Supporting frame (1) for a subassembly of gas-insulated switchgear, having at least two bridge-pieces (2), at least one fastening point provided on each of the bridge-pieces (2) in order to accommodate the subassembly to be supported, and at least one connecting point provided on each of the bridge-pieces (2) in order to connect the bridge-piece (2) to a foundation (5), an intermediate space (6) which is bridged only at the at least one connecting point being provided between the respective bridge-piece (2) and the foundation (5), the two bridge-pieces (2) being connected to at least one cross-member (3) designed as a fastening point, characterized in that the bridge-pieces (2) are of flexible design.

2. Supporting frame according to Claim 1, characterized in that the bridge-pieces (2) are designed as a metal section, in particular as an I-section or as a tubular section of rectangular or round cross-section.

3. Supporting frame according to Claim 1, characterized in that the subassembly has switching devices, the longitudinal axis of which is arranged perpendicularly to the supporting frame (1) and the moving masses of which move essentially in the direction of the longitudinal axis.

4. Supporting frame according to Claim 3, characterized in that circuit-breakers are provided as the switching devices.

5. Supporting frame according to Claim 1, characterized in that the fastening point is provided in the centre region of the bridge-piece (2) and the connecting point is in each case provided at the end of the bridge-piece (2).

6. Supporting frame according to Claim 1, characterized in that the fastening point is provided in each case at each end of the bridge-piece (2), and in that the connecting point is provided in the centre region of the bridge-piece (2) .

**7.** Supporting frame according to Claim 6, characterized in that, at each end of the bridge-piece (2), a stop (10) connected to the foundation (5) limits the spring deflection of the bridge-piece (2).

**8.** Supporting frame according-to Claim 7, characterized in that the stop (10) is made of an elastic material.


**Revendications**

**1.** Structure de suspension (1) pour un ensemble d'une installation de commutation isolée au gaz, avec au moins deux traverses (2), avec au moins un point de fixation prévu sur chacune des traverses (2) pour la pose de l'ensemble à porter, avec au moins un point d'assemblage prévu sur chacune des traverses (2) pour l'assemblage de la traverse (2) avec une fondation (5), dans lequel il est respectivement prévu, entre chaque traverse (2) et la fondation (5), un espace intermédiaire (6), qui n'est occupé qu'audit au moins un point d'assemblage, dans lequel les deux traverses (2) sont assemblées avec au moins une entretoise transversale (3) configurée comme un point d'assemblage, caractérisée en ce que les traverses (2) sont configurées de façon élastique.

**2.** Structure de suspension suivant la revendication 1, caractérisée en ce que les traverses (2) sont constituées par un profilé métallique, en particulier un profilé I ou un profilé tubulaire avec une section transversale rectangulaire ou ronde.

**3.** Structure de suspension suivant la revendication 1, caractérisée en ce que l'ensemble présente des appareils de commutation, dont l'axe longitudinal est disposé perpendiculairement à la structure de suspension (1) et dont les masses en mouvement se déplacent sensiblement dans la direction de l'axe longitudinal.

**4.** Structure de suspension suivant la revendication 3, caractérisée en ce qu'il est prévu des commutateurs de puissance comme appareils de commutation.

**5.** Structure de suspension suivant la revendication 1, caractérisée en ce que le point de fixation est prévu dans la région du milieu et le point d'assemblage respectivement à l'extrémité de la traverse (2).

**6.** Structure de suspension suivant la revendication 1, caractérisée en ce que le point de fixation est prévu respectivement à chaque extrémité de la traverse (2) et en ce que le point d'assemblage est prévu dans la région du milieu de la traverse (2).

**7.** Structure de suspension suivant la revendication 6, caractérisée en ce qu'à chaque extrémité de la traverse (2), une butée (10) assemblée à la fondation (5) limite le mouvement élastique de la traverse (2).

**8.** Structure de suspension suivant la revendication 7, caractérisée en ce que la butée (10) est fabriquée en une matière élastique.

**FIG. 1**

**FIG. 2**

**FIG. 3**